# EUROPÄISCHE PATENTSCHRIFT

(11) **EP 2 174 749 B1**
(45) Veröffentlichungstag und Bekanntmachung des Hinweises auf die Patenterteilung: **19.07.2017**
(21) Anmeldenummer: 08105528.7
(22) Anmeldetag: 09.10.2008
(51) Int. Cl.: B25F 5/00

(54) **Staubabsaugung für eine Akkuelektrohandwerkzeugmaschine**
Dust suction for a rechargeable electrical manual tool machine
Aspiration de poussière pour une machine-outil manuelle électrique fonctionnant sur batterie

(43) Veröffentlichungstag der Anmeldung: 14.04.2010
(73) Patentinhaber: HILTI Aktiengesellschaft, 9494 Schaan (LI)
(72) Erfinder: Ontl, Rainer, 86899 Landsberg am Lech (DE)
(74) Vertreter: Hilti Aktiengesellschaft Corporate Intellectual Property

(56) Entgegenhaltungen:
- EP-A- 1 240 976
- EP-A- 1 293 298
- EP-A- 1 477 272
- WO-A-2007/083844
- DE-A1- 2 925 908
- JP-A- 2005 278 375
- US-A- 6 007 373

## Beschreibung

Die Erfindung bezeichnet ein Staubabsaugungsmodul mit einem Elektromotor, welches an eine Akkuelektrohandwerkzeugmaschine montierbar ist und von dieser gespeist wird, insbesondere an einen Bohr- oder Meisselhammer.

Akkuelektrohandwerkzeugmaschinen werden üblicherweise modular in verschiedenen Leistungsklassen gefertigt, um den Anforderungen und Neigungen der Kunden hinsichtlich Leistungskapazität und Gewicht optimal entsprechen zu können. Zudem bedingt die Entwicklung der Akkuzelltechnologie neuartige Zelltypen, wodurch unterschiedliche Modulspannungen der Akkuelektrohandwerkzeugmaschine bzw. des zugeordneten Akkumoduls resultieren.

Der bei Bohr- und Meisselarbeiten anfallende Staub ist für den Nutzer ungesund, verursacht Nacharbeiten und erhöht den Verschleiss von Elektrohandwerkzeugmaschinen. Zur Absaugung des Staubs am Entstehungsort geeignete Staubabsaugungsmodule weisen am Entstehungsort einen Saugkopf auf, der mit einem längenveränderlichen Saugrohr verbunden ist, in dem ein Lüfterrad für Unterdruck sorgt. Der abgesaugte Staub wird in einem Staubfilter herausgefiltert und in einem Staubbehälter aufgefangen.

Es sind derartige Staubabsaugungsmodule bekannt, deren zur Staubabsaugung dienendes Lüfterrad mechanisch von der Elektrohandwerkzeugmaschine gespeist wird, bspw. nach der US6851898.

Nach der US7182150 ist in einem Staubabsaugungsmodul für eine Akkuelektrohandwerkzeugmaschine mit einem Akkumodul zum Antrieb des Lüfterrads ein Gleichstrommotor angeordnet, dem eine Modulelektronik vorgeschaltet ist, mit dem der Gleichstrommotor abhängig vom Steuerschalter der Akkuelektrohandwerkzeugmaschine gesteuert wird.

Die DE 29 25 908 beschreibt eine Handwerkzeugmaschine mit einer Staubabsaugungsvorrichtung, die per Batterie oder über einen Netzanschluss versorgt wird.

Die EP 1 477 272 A1 beschreibt eine akkubetriebene Handwerkzeugmaschine. Eine zugehörige Staubabsaugungsvorrichtung wird über den Akku der Handwerkzeugmaschine mit Strom versorgt.

Die US 6,007,373 beschreibt ein modulares Stromversorgungssystem für verschiedene Handwerkzeugmaschinen. Eine Spannungsregler passt die Spannung einer Primärquelle an die unterschiedlichen von den Handwerkzeugmaschinen geforderten Versorgungsspannungen an.

Die Aufgabe wird im Wesentlichen durch die Merkmale des Anspruchs 1 gelöst. Vorteilhafte Weiterbildungen ergeben sich aus den Unteransprüchen.

So weist ein Staubabsaugungsmodul für eine Akkuelektrohandwerkzeugmaschine mit einem Akkumodul ein Lüfterrad auf, das mit einem vom Akkumodul bestrombaren Gleichstrommotor verbunden ist, wobei dem Gleichstrommotor ein Gleichstromsteller zur Umwandlung einer Akkuspannung des Akkumoduls in eine Motorspannung des Gleichstrommotors vorgeschaltet ist.

Indem dem Gleichstrommotor ein Gleichstromsteller (DC-DC-Wandler) vorgeschaltet ist, kann der Gleichstrommotor für eine andere Motorspannung als der Akkuspannung des Akkumoduls ausgelegt werden, insbesondere auf eine niedrigere Motorspannung, die der niedrigsten Akkuspannung im modularen System verschiedener Akkuelektrohandwerkzeugmaschinen mit zugeordneten Akkumodulen entspricht. Die Umsetzung der Akkuspannung in die niedrigere Motorspannung übernimmt der Gleichstromsteller in Form eines Tiefsetzstellers, der nur in den mit verhältnismässig (zur Anzahl der Akkuelektrohandwerkzeugmaschinen) geringen Stückzahlen gefertigten Staubabsaugungsmodulen vorhanden ist.

Vorteilhaft ist der Gleichstromsteller ein induktiver Wandler, wodurch die Umsetzung auch bei höheren Strömen verlustarm erfolgt.

Vorteilhaft besteht ein Akkuhandwerkzeugsystem aus zumindest zwei Akkuelektrohandwerkzeugmaschinen mit jeweils zugeordneten Akkumodulen unterschiedlicher Akkuspannung und dem Staubabsaugungsmodul mit dem Gleichstrommotor, wobei dessen Motorspannung der niedrigeren Akkuspannung entspricht, wodurch der Gleichstrommotor mit maximaler Systemleistung betreibbar ist.

Die Erfindung wird bezüglich eines vorteilhaften Ausführungsbeispiels näher erläutert mit einer Darstellung als Akkuhandwerkzeugsystem.

Nach der Darstellung besteht ein Akkuhandwerkzeugsystem 1 aus zwei Akkuelektrohandwerkzeugmaschinen 2a, 2b mit jeweils zugeordneten Akkumodulen 3a, 3b der unterschiedlichen Akkuspannungen UAa, UAb und einem (zu beiden zweckentsprechend kombinierbaren) Staubabsaugungsmodul 4 mit einem Lüfterrad 5, das mit einem Gleichstrommotor 6 verbunden ist. Dem vom Akkumodul 3a mit der Akkuspannung UAa bestromten Gleichstrommotor 6, dessen Motorspannung UM der niedrigeren Akkuspannung MIN(UAa, UAb) entspricht, ist ein Gleichstromsteller 7 in Form eines induktiven Tiefsetzstellers vorgeschaltet, der die Akkuspannung UAa auf die Motorspannung UM herabsetzt.

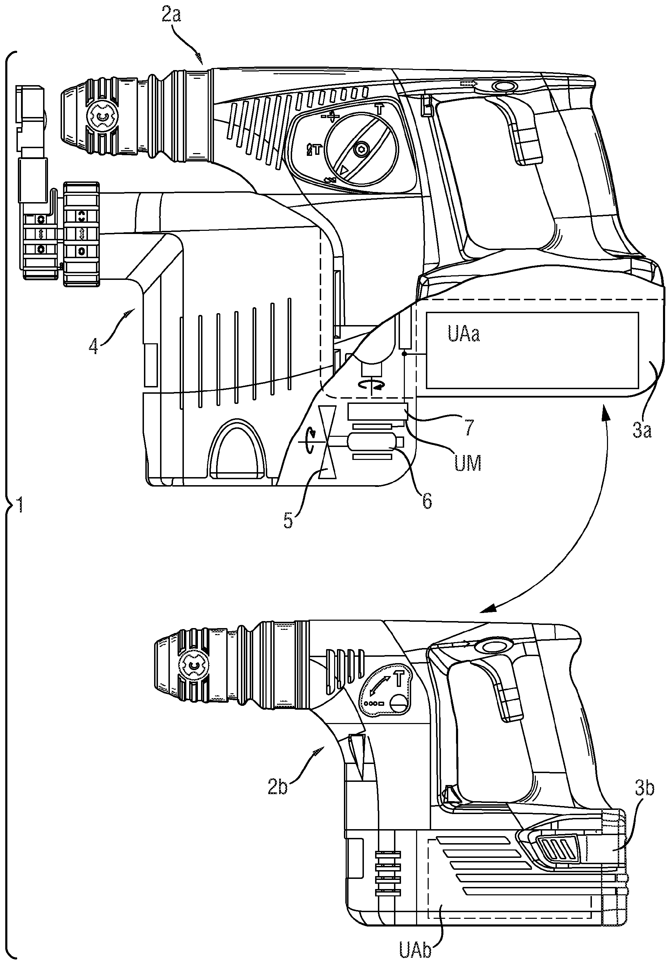

## Patentansprüche

1. Staubabsaugungsmodul für eine mit einem Akkumodul (3a, 3b) versehene Akkuelektrohandwerkzeugmaschine (2a, 2b), wobei das Staubabsaugungsmodul ein Lüfterrad (5), einen Gleichstrommotor (7) und eine Verbindung zu dem Akkumodul der Akkuelektrohandwerkzeugmaschine (2a, 2b) zum Bestromen des Gleichstrommotors (6) mittels des Akkumoduls (3a, 3b) aufweist, **dadurch gekennzeichnet, dass** dem Gleichstrommotor (6) ein Gleichstromsteller (7) zur Umwandlung einer Akkuspannung (UAa, UAb) des Akkumoduls (3a, 3b) in eine Motorspannung (UM) des Gleichstrommotors (6) vorgeschaltet ist.

2. Staubabsaugungsmodul nach Anspruch 1, **dadurch gekennzeichnet, dass** der Gleichstromsteller (7) ein induktiver Wandler ist.

## Claims

1. Dust-extraction module for a cordless hand-held power tool (2a, 2b) provided with a battery module (3a, 3b), the dust-extraction module comprising a fan propeller (5), a direct current motor (6) and a connection to the battery module of the cordless hand-held power tool (2a, 2b) for powering the direct current motor (6) by means of the battery module (3a, 3b), **characterised in that** a DC-DC converter (7) for converting a battery voltage (UAa, UAb) of the battery module (3a, 3b) into a motor voltage (UM) of the direct current motor (6) is connected in series with the direct current motor (6).

2. Dust-extraction module according to claim 1, **characterised in that** the DC-DC converter (7) is an inductive converter.

## Revendications

1. Module de dépoussiérage pour une machine-outil électrique manuelle à batterie (2a, 2b), munie d'un module de batterie (3a, 3b), dans lequel le module de dépoussiérage comporte une roue de ventilateur (5), un moteur à courant continu (7) et une connexion au module de batterie de la machine-outil électrique manuelle à batterie (2a, 2b) pour alimenter le moteur à courant continu (6) au moyen du module de batterie (3a, 3b), **caractérisé en ce qu'**un régulateur de courant continu (7) est raccordé en amont du moteur à courant continu (6) pour convertir une tension de batterie (UAa, UAb) du module de batterie (3a, 3b) en une tension de moteur (UM) du moteur à courant continu (6).

2. Module de dépoussiérage selon la revendication 1, **caractérisé en ce que** le régulateur de courant continu (7) est un convertisseur inductif.
